# EUROPÄISCHE PATENTSCHRIFT

(11) **EP 3 381 620 B1**
(45) Veröffentlichungstag und Bekanntmachung des Hinweises auf die Patenterteilung: **28.08.2019**
(21) Anmeldenummer: 17000541.7
(22) Anmeldetag: 31.03.2017
(51) Int. Cl.: B25F 5/00, B25F 5/02

(54) **HANDGEFÜHRTES ARBEITSGERÄT**
MANUALLY OPERATED WORK DEVICE
APPAREIL DE TRAVAIL PORTATIF

(43) Veröffentlichungstag der Anmeldung: 03.10.2018
(73) Patentinhaber: Andreas Stihl AG & Co. KG, 71336 Waiblingen (DE)
(72) Erfinder: SCHULZ, Andreas, 76275 Ettlingen (DE); BLECHSCHMIDT, Ralf, 71394 Kernen (DE)
(74) Vertreter: Reinhardt, Annette

(56) Entgegenhaltungen:
- EP-A1- 2 251 152
- WO-A1-02/06015
- DE-A1-102007 021 633
- DE-A1-102009 007 030
- DE-A1-102009 011 684

## Beschreibung

Die Erfindung betrifft ein handgeführtes Arbeitsgerät der im Oberbegriff des Anspruchs 1 ausgebildeten Gattung.

Aus der DE 10 2009 011 685 A1 ist ein handgeführtes Arbeitsgerät mit einem Verbrennungsmotor bekannt, das einen vom Bediener zu betätigenden Kurzschlussschalter zum Kurzschließen der Zündung des Verbrennungsmotors besitzt. Am Motorgehäuse des Arbeitsgeräts sind Kontakte angeordnet, die in der Aus-Stellung eines Bedienschalters miteinander elektrisch leitend verbunden sind. Der Bedienschalter ist am Motorgehäuse schwenkbar gelagert. Der Bedienschalter dient auch dazu, die Stellung einer Drosselklappe und einer Chokeklappe eines Vergasers des Verbrennungsmotors des Arbeitsgeräts einzustellen. Der Vergaser ist üblicherweise vom Verbrennungsmotor über mindestens ein Antivibrationselement schwingungsentkoppelt. Aufgrund der Beweglichkeit von Vergaser und Bedienschalter zueinander kann sich die Position des Bedienschalters gegenüber dem Vergaser im Betrieb ändern. Dadurch ist die Einstellung der Position von Drosselklappe und Chokeklappe in einer oder mehreren Startstellungen über den Bedienschalter nicht immer mit der erforderlichen Genauigkeit möglich.

Es ist auch bekannt, den Bedienschalter, der zur Betätigung eines Kurzschlussschalters durch den Bediener und zur Einstellung mindestens einer Startstellung der Drosselelemente eines Vergasers dient, gegenüber dem Vergaser zu fixieren. Dadurch bewegt sich der Bedienschalter im Betrieb mit dem Vergaser, so dass eine genaue Einstellung der Positionen von Drosselelementen des Vergasers in der Startstellung ermöglicht wird. Die Kontakte, mit denen der Bedienschalter zur Bildung eines Kurzschlussschalters zusammenwirkt, sind bei einer solchen Anordnung am Vergaser angeordnet. Die Kontakte sind über elektrische Leitungen, die über den Schwingspalt geführt sind, mit der Zündeinrichtung des Verbrennungsmotors bzw. mit Masse verbunden. Das Verlegen der elektrischen Leitungen erfordert bei der Herstellung des Arbeitsgeräts einen erhöhten Montageaufwand. Die elektrischen Leitungen sind erhöhten mechanischen Belastungen aufgrund der Relativbewegung von Vergaser und Verbrennungsmotor ausgesetzt. Bei Servicearbeiten am Vergaser müssen die elektrischen Leitungen üblicherweise gelöst und nach der Wartung neu verlegt werden, was einen erhöhten Aufwand beim Service bedingt.

Handgeführte Arbeitsgeräte sind aus EP 2 251 152 A1 und DE 10 2009 007030 A1 bekannt.

Der Erfindung liegt die Aufgabe zugrunde, ein handgeführtes Arbeitsgerät der gattungsgemäßen Art zu schaffen, bei dem der Aufwand für die Montage und den Service verringert ist.

Diese Aufgabe wird durch ein handgeführtes Arbeitsgerät mit den Merkmalen des Anspruchs 1 gelöst.

Es ist vorgesehen, dass ein erstes Kontaktelement Teil einer ersten Baugruppe und ein zweites Kontaktelement Teil einer zweiten Baugruppe sind und dass die Kontaktelemente bei geschlossenem Schalter einen Schwingspalt zwischen der ersten Baugruppe und der zweiten Baugruppe überbrücken. Dadurch, dass der Schalter selbst den Schwingspalt überbrückt, können elektrische Leitungen, die den Schwingspalt überbrücken, entfallen. Kontaktelemente eines elektrischen Schalters können auf einfache Weise so ausgelegt werden, dass neben den üblichen Fertigungstoleranzen auch die Lagetoleranzen, die sich aufgrund der Relativbewegung über den Schwingspalt ergeben, ausgeglichen werden. Dadurch ergibt sich ein einfacher und robuster Aufbau. Dadurch, dass über den Schwingspalt geführte elektrische Leitungen entfallen können, kann der Aufwand bei Montage und Service verringert werden.

Vorteilhaft ist das erste Kontaktelement durch eine erste Kontaktfeder gebildet. An der ersten Kontaktfeder ist vorteilhaft ein Abstützbereich der ersten Kontaktfeder gebildet, mit dem sich die erste Kontaktfeder an der ersten Baugruppe abstützt. Vorteilhaft ist an der ersten Kontaktfeder ein Befestigungsbereich der ersten Kontaktfeder gebildet, an dem die erste Kontaktfeder an der ersten Baugruppe fixiert ist. Der Abstützbereich und der Befestigungsbereich besitzen vorteilhaft einen Abstand zueinander, so dass die Kontaktfeder in dem zwischen Abstützbereich und Befestigungsbereich liegenden Bereich mindestens teilweise frei federnd ausgebildet werden kann. In dem frei federnden Bereich ist die erste Kontaktfeder nicht abgestützt. In bevorzugter Gestaltung ist die erste Kontaktfeder aus einem elektrisch leitenden Material ausgebildet, beispielsweise aus metallischem Blech. Besonders bevorzugt ist die erste Kontaktfeder als längliches, gebogenes Blech ausgebildet. In bevorzugter Gestaltung wirkt das Kontaktelement in Längserstreckung der Kontaktfeder zwischen dem Abstützbereich und dem Befestigungsbereich auf die Kontaktfeder. Dadurch, dass das Kontaktelement in dem frei federnden Bereich auf die erste Kontaktfeder wirkt, sind vergleichsweise große Verformungen der Kontaktfeder möglich, so dass große Lagetoleranzen ausgeglichen werden können. Bevorzugt wirkt das Kontaktelement in einem mittleren Abschnitt zwischen Abstützbereich und Befestigungsbereich auf die erste Kontaktfeder. In diesem mittleren Abschnitt sind die größten Verformungen der ersten Kontaktfeder möglich.

Zwischen dem Abstützbereich und dem Befestigungsbereich ist die Kontaktfeder vorzugsweise nicht abgestützt. In bevorzugter Gestaltung ist die Kontaktfeder vorgespannt, insbesondere in Richtung auf das Kontaktelement. Dadurch, dass das Kontaktelement zwischen dem Abstützbereich und dem Befestigungsbereich auf die Kontaktfeder wirkt, kann auf einfache Weise sichergestellt werden, dass zwischen dem Kontaktelement und der ersten Kontaktfeder in jeder möglichen Relativlage der ersten Baugruppe und der zweiten Baugruppe zueinander sicher ein elektrischer Kontakt besteht. Zwischen dem Befestigungsbereich und dem Abstützbereich besitzt die erste Kontaktfeder bevorzugt einen frei federnden Federbereich. Die Länge des frei federnden Federbereichs ist bevorzugt vergleichsweise groß. Die in Richtung der Längserstreckung gemessene Länge des frei federnden Federbereichs beträgt vorzugsweise mindestens 10 mm, insbesondere mindestens 15 mm, bevorzugt mindestens 20 mm.

Vorteilhaft ist an der ersten Baugruppe ein Anschlag für das zweite Kontaktelement ausgebildet. Der Federbereich ist bevorzugt ein frei federnder Federbereich, der zwischen dem Befestigungsbereich und dem Abstützbereich der ersten Kontaktfeder angeordnet ist. Der Anschlag begrenzt vorteilhaft die Durchbiegung der ersten Kontaktfeder bei geschlossenem Schalter. Die Begrenzung der Durchbiegung erfolgt dabei durch die Begrenzung der Endlage des zweiten Kontaktelements. Der Anschlag verhindert, dass die erste Kontaktfeder bei ungünstiger Relativlage der ersten Baugruppe und der zweiten Baugruppe zueinander beim Schließen des Schalters unzulässig verformt wird. Dadurch werden auf einfache Weise bleibende Verformungen der ersten Kontaktfeder und insbesondere auch bleibende Verformungen einer zweiten Kontaktfeder vermieden.

Vorteilhaft kommt das zweite Kontaktelement an einem Kontaktbereich des Federbereichs mit der ersten Kontaktfeder in Kontakt. Der Kontaktbereich der ersten Kontaktfeder besitzt in bevorzugter Gestaltung in Richtung einer Längserstreckung der ersten Kontaktfeder einen Abstand zu dem Anschlag. In alternativer Gestaltung kann jedoch auch vorgesehen sein, dass der Kontaktbereich im Bereich des Anschlags liegt und in Richtung der Längserstreckung der ersten Kontaktfeder zum Anschlag keinen Abstand besitzt.

Bei geöffnetem Schalter ist vorteilhaft vorgesehen, dass das erste Kontaktelement zu dem zweiten Kontaktelement einen Abstand besitzt. Dadurch kann auf einfache Weise sichergestellt werden, dass der Schalter nicht aufgrund der Relativbewegungen zwischen der ersten und der zweiten Baugruppe ohne Betätigung des Schalters durch den Bediener, also unbeabsichtigt, geschlossen wird. Der Abstand zwischen dem ersten Kontaktelement und dem zweiten Kontaktelement entspricht bei geöffnetem Schalter vorteilhaft etwa der 1,5fachen bis 3fachen maximalen Relativbewegung zwischen der ersten Baugruppe und der zweiten Baugruppe an dem ersten Kontaktelement.

In bevorzugter Gestaltung umfasst der Schalter ein drittes Kontaktelement, das Teil der ersten Baugruppe ist. Das dritte Kontaktelement ist bei geschlossenem Schalter bevorzugt über das zweite Kontaktelement elektrisch leitend mit dem ersten Kontaktelement verbunden. Das zweite Kontaktelement stellt demnach eine elektrisch leitende Verbindung zwischen dem ersten und dem dritten Kontaktelement der ersten Baugruppe her.

Vorteilhaft ist das dritte Kontaktelement durch eine zweite Kontaktfeder gebildet. An der zweiten Kontaktfeder ist vorteilhaft ein Abstützbereich der zweiten Kontaktfeder gebildet. Mit dem Abstützbereich der zweiten Kontaktfeder stützt sich die zweite Kontaktfeder vorteilhaft an der ersten Baugruppe ab. Vorzugsweise ist an der zweiten Kontaktfeder ein Befestigungsbereich der zweiten Kontaktfeder gebildet, an dem die zweite Kontaktfeder an der ersten Baugruppe fixiert ist. In bevorzugter Gestaltung ist die zweite Kontaktfeder aus einem elektrisch leitenden Material gebildet, beispielsweise aus metallischem Blech. Besonders bevorzugt ist die zweite Kontaktfeder als längliches, gebogenes Blech ausgebildet. Bevorzugt sind die erste Kontaktfeder und die zweite Kontaktfeder mindestens teilweise identisch ausgebildet. Besonders bevorzugt sind die erste Kontaktfeder und die zweite Kontaktfeder in ihrem Abstützbereich und in ihrem frei federnden Federbereich identisch ausgebildet. Durch die identische Ausbildung ergeben sich für die erste und die zweite Kontaktfeder die gleichen auf das Kontaktelement wirkenden Federkräfte. Dadurch kann eine sichere Kontaktierung beider Kontaktfedern durch das Kontaktelement auf einfache Weise sichergestellt werden.

In bevorzugter Gestaltung verläuft zwischen dem Abstützbereich der ersten Kontaktfeder und dem Abstützbereich der zweiten Kontaktfeder eine Trennrippe. Die Trennrippe ist in bevorzugter Gestaltung Teil der ersten Baugruppe. Dadurch kann auf einfache Weise eine elektrische Trennung der beiden Kontaktfedern im Abstützbereich sichergestellt werden. Dadurch, dass die erste und/oder die zweite Kontaktfeder am Abstützbereich und im Befestigungsbereich gehalten und dadurch die Lage der Kontaktfeder vorgegeben ist, ist ein Kontakt der ersten und der zweiten Kontaktfedern im frei federnden Federbereich auf einfache Weise vermieden. Die erste und die zweite Kontaktfeder sind dabei vorteilhaft quer zur Trennebene in Richtung auf die jeweils andere Kontaktfeder bei den im Betrieb an den Kontaktfedern wirkenden Kräften nicht oder nur sehr gering elastisch.

In bevorzugter Gestaltung weist das Arbeitsgerät einen Verbrennungsmotor auf. Der Verbrennungsmotor umfasst vorteilhaft eine Zündeinrichtung, die über den Schalter mit Masse verbindbar ist. Der Schalter ist demnach ein Zündschalter des Verbrennungsmotors. Das Arbeitsgerät besitzt vorteilhaft einen Vergaser zur Zufuhr von Kraftstoff/Luft-Gemisch zu dem Verbrennungsmotor. Zur Einstellung mindestens einer Startstellung des Vergasers ist vorteilhaft ein Betriebsartensteller vorgesehen. Der Verbrennungsmotor ist insbesondere Teil der ersten Baugruppe, und der Vergaser und der Betriebsartensteller sind vorteilhaft Teil der zweiten Baugruppe. Der Vergaser und der Betriebsartensteller sind demnach über den Schwingspalt voneinander getrennt und führen im Betrieb Relativbewegungen zueinander aus. Vorteilhaft trägt der Betriebsartensteller das zweite Kontaktelement. Vorteilhaft ist das zweite Kontaktelement an dem Betriebsartensteller angeordnet. Die Kraftstoffzufuhr kann anstatt über einen Vergaser auch auf andere Weise, beispielsweise über ein elektromagnetisches Ventil oder ähnliches, erfolgen. Der Verbrennungsmotor ist insbesondere ein Zweitaktmotor. Zweitaktmotoren sind durch den Betrieb des Motors schwingungsangeregt.

In einer ersten vorteilhaften Gestaltungsvariante ist vorgesehen, dass der Betriebsartensteller an einem Griffgehäuse gelagert ist. Das Griffgehäuse ist Teil der zweiten Baugruppe. Der von dem Schalter überbrückte Schwingspalt ist dabei ein Schwingspalt zwischen dem Griffgehäuse und dem Motorgehäuse.

In vorteilhafter alternativer Gestaltung ist vorgesehen, dass das Arbeitsgerät eine dritte Baugruppe besitzt. Die dritte Baugruppe weist ein Griffgehäuse auf. Der zwischen der ersten Baugruppe und der zweiten Baugruppe gebildete Schwingspalt ist ein erster Schwingspalt. Der erste Schwingspalt verläuft vorteilhaft zwischen dem Vergaser und dem Verbrennungsmotor bzw. dem Motorgehäuse. Vorteilhaft wird der erste Schwingspalt von mindestens einem Antivibrationselement überbrückt, das vollständig oder teilweise als Gummipuffer ausgebildet sein kann oder Filz, Metallgestrick oder ähnliches enthält.

Zwischen der dritten Baugruppe und der ersten Baugruppe ist ein zweiter Schwingspalt gebildet. Der zweite Schwingspalt ist von mindestens einem Antivibrationselement überbrückt, das beispielsweise eine Stahlfeder umfassen kann. Der zweite Schwingspalt ist ein Schwingspalt zwischen Griffgehäuse und Verbrennungsmotor bzw. Motorgehäuse. Der Schalter überbrückt dabei den ersten Schwingspalt zwischen Vergaser und Motorgehäuse. Der zweite, zwischen dem Griffgehäuse und der ersten Baugruppe gebildete Schwingspalt ist vorteilhaft in dieser Ausgestaltungsvariante nicht von dem Schalter überbrückt.

Vorteilhaft trägt der Betriebsartensteller das zweite Kontaktelement. Der Betriebsartensteller ist bevorzugt aus Kunststoff. An dem Betriebsartensteller ist bevorzugt das zweite Kontaktelement befestigt. Das zweite Kontaktelement liegt bei geschlossenem Schalter vorteilhaft an dem Federbereich des ersten Kontaktelements an. Besonders bevorzugt liegt das zweite Kontaktelement bei geschlossenem Schalter an dem Federbereich des ersten Kontaktelements und an dem Federbereich des dritten Kontaktelements an.

Vorteilhaft ist das zweite Kontaktelement formschlüssig mit dem Betriebsartensteller verbunden. Zur formschlüssigen Sicherung des zweiten Kontaktelements ist vorteilhaft vorgesehen, dass das zweite Kontaktelement eine Aussparung aufweist. Durch die Aussparung ragt vorteilhaft eine Nase des Betriebsartenstellers, die das zweite Kontaktelement formschlüssig sichert. Dadurch wird auf einfache Weise eine Sicherung des zweiten Kontaktelements an dem Betriebsartensteller erreicht. Der Betriebsartensteller besitzt vorzugsweise einen Anschlagabschnitt, mit dem er über den Befestigungsabschnitt des zweiten Kontaktelements auf den Anschlag wirkt. Es kann auch vorgesehen sein, dass der Betriebsartensteller unmittelbar mit dem Anschlagabschnitt auf den Anschlag wirkt.

Ausführungsbeispiele der Erfindung werden im Folgenden anhand der Zeichnung erläutert. Es zeigen:
- Fig. 1: eine schematische Darstellung eines ersten Ausführungsbeispiels eines handgeführten Arbeitsgeräts,
- Fig. 2: eine perspektivische ausschnittsweise Darstellung des Arbeitsgeräts in Blickrichtung des Pfeils II in Fig. 1 auf das Arbeitsgerät mit abgenommener Haube,
- Fig. 3: eine weitere perspektivische Darstellung eines Ausschnitts des Arbeitsgeräts mit abgenommener Haube bei geöffnetem Schalter,
- Fig. 4: eine ausschnittsweise Seitenansicht in Richtung des Pfeils IV in Fig. 3,
- Fig. 5: eine ausschnittsweise schematische perspektivische Schnittdarstellung durch den Bereich des Vergasers des Arbeitsgeräts bei geöffnetem Schalter,
- Fig. 6: eine Schnittdarstellung des Bereichs aus Fig. 5,
- Fig. 7: eine vergrößerte ausschnittsweise Schnittdarstellung des Arbeitsgeräts bei geschlossenem Schalter,
- Fig. 8: die Anordnung aus Fig. 7 in perspektivischer Darstellung,
- Fig. 9: eine perspektivische ausschnittsweise Darstellung in einer weiteren Schnittebene bei geschlossenem Schalter,
- Fig. 10: eine vergrößerte Darstellung eines Bereichs aus Fig. 9,
- Fig. 11: eine schematische Seitenansicht eines weiteren Ausführungsbeispiels eines Arbeitsgeräts,
- Fig. 12: eine schematische Darstellung eines weiteren Ausführungsbeispiels eines Arbeitsgeräts.

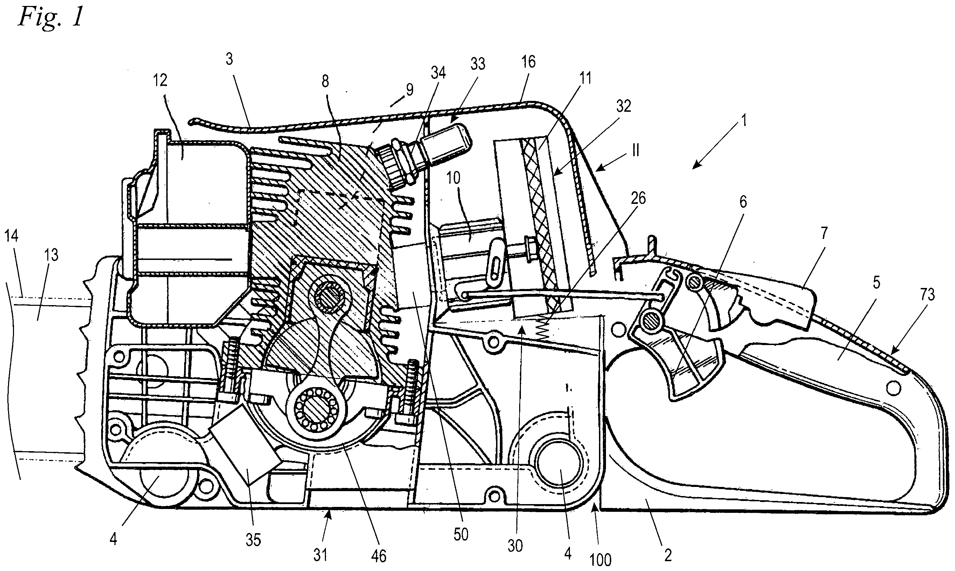

Fig. 1 zeigt schematisch als Ausführungsbeispiel für ein handgeführtes, motorgetriebenes Arbeitsgerät eine Motorsäge 1. Die Motorsäge 1 besitzt ein Griffgehäuse 2 sowie ein Motorgehäuse 3. Das Griffgehäuse 2 umfasst einen hinteren Handgriff 5, an dem ein Gashebel 6 sowie eine Gashebelsperre 7 schwenkbar gelagert sind. Das Griffgehäuse 2 ist über Antivibrationselemente 4, von denen in Fig. 1 zwei schematisch gezeigt sind, mit dem Motorgehäuse 3 verbunden. Die Antivibrationselemente 4 lassen Relativbewegungen zwischen dem Griffgehäuse 2 und dem Motorgehäuse 3 zu und überbrücken einen zwischen Griffgehäuse 2 und Motorgehäuse 3 gebildeten Schwingspalt 100. Im Motorgehäuse 3 ist ein Verbrennungsmotor 8 angeordnet, der fest am Motorgehäuse 3 montiert ist. Der Verbrennungsmotor 8 besitzt einen Brennraum 9 und eine Zündkerze 34, die von einem in Fig. 1 schematisch gezeigten Zündmodul 35 angesteuert ist. Das Zündmodul 35 und die Zündkerze 34 sind Teil einer Zündeinrichtung 33 der Motorsäge 1. Am Verbrennungsmotor 8 ist ein Abgasschalldämpfer 12 für Abgase angeordnet. Der Verbrennungsmotor 8 treibt eine in Fig. 1 schematisch dargestellte Sägekette 14 an. Die Sägekette 14 ist an einer Führungsschiene 13 umlaufend geführt.

Zur Zufuhr von Kraftstoff/Luft-Gemisch besitzt der Verbrennungsmotor 8 einen Vergaser 10, der über einen elastischen Verbindungsstutzen 50 mit dem Verbrennungsmotor 8 in Verbindung steht. Der Verbindungsstutzen 50 ist vorteilhaft aus elastischem Material ausgebildet, so dass der Vergaser 10 und der Verbrennungsmotor 8 schwingungsentkoppelt verbunden sind. Der Vergaser 10 saugt über einen Luftfilter 11 Luft für die Zumischung von Kraftstoff für die anschließende Verbrennung des Gemischs im Brennraum 9 an. Der Luftfilter 11 ist über Antivibrationselemente 26, von denen in Fig. 1 eines schematisch dargestellt ist, mit dem Motorgehäuse 3 verbunden. Das Antivibrationselement 26 überbrückt einen zwischen dem Motorgehäuse 3 und dem Vergaser 10 mit dem Luftfilter 11 gebildeten ersten Schwingspalt 30. Das Motorgehäuse 3 besitzt eine Haube 16, die den Bereich von Vergaser 10 und Luftfilter 11 abdeckt und die Teil der ersten Baugruppe 31 ist. Der Vergaser 10 und der Luftfilter 11 sind innerhalb des Motorgehäuses 3 angeordnet, jedoch über den **ersten** Schwingspalt 30 vom Motorgehäuse 3 getrennt.

Die Motorsäge 1 ist aus drei zueinander relativ beweglichen Baugruppen 31, 32 und 73 aufgebaut. Eine erste Baugruppe 31 weist das Motorgehäuse 3 sowie den fest mit dem Motorgehäuse 3 verbundenen Verbrennungsmotor 8, den Abgasschalldämpfer 12, die Führungsschiene 13 und die Sägekette 14 auf. Eine zweite Baugruppe 32 weist den Luftfilter 11 und den Vergaser 10 auf. Zwischen der ersten Baugruppe 31 und der zweiten Baugruppe 32 ist der erste Schwingspalt 30 gebildet. Eine dritte Baugruppe 73 umfasst das Griffgehäuse 2 mit dem Handgriff 5 und dem Gashebel 6 und der Gashebelsperre 7. Die dritte Baugruppe 73 ist über den zweiten Schwingspalt 100 von der ersten Baugruppe 31 getrennt. Die Schwingspalte 30 und 100 lassen Relativbewegungen der Baugruppen 31, 32 und 73 zueinander zu.

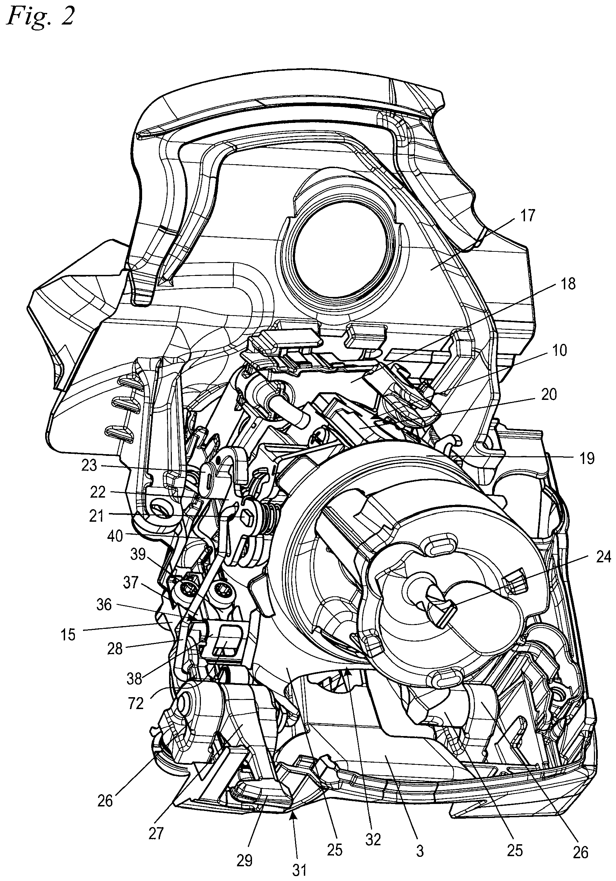

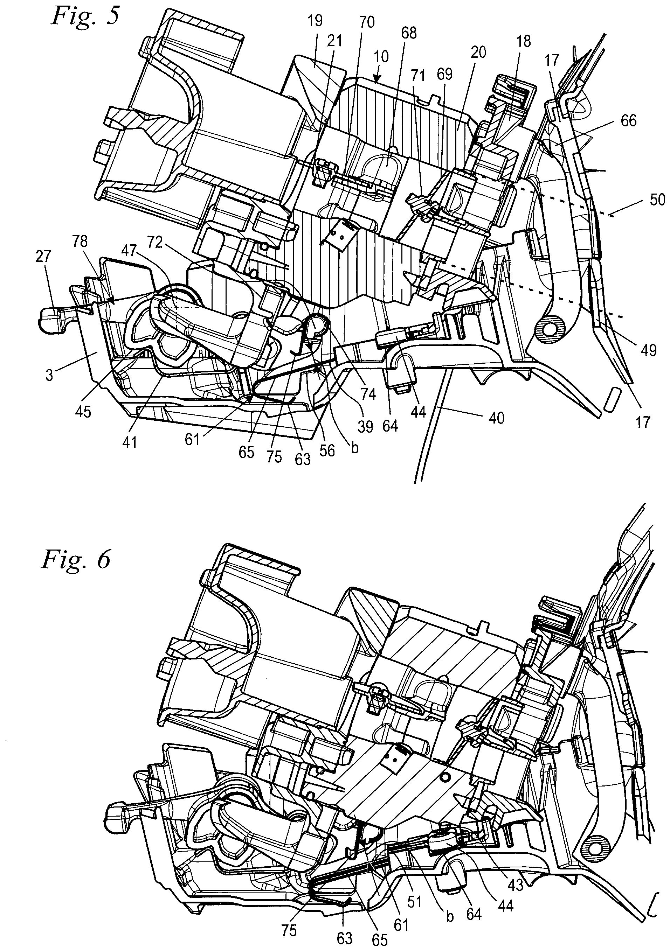

Fig. 2 zeigt den Bereich der zweiten Baugruppe 32, wobei die Haube 16 abgenommen ist. In Fig. 2 ist eine Zwischenwand 17 gezeigt, die den Raum, in dem der Verbrennungsmotor 8 angeordnet ist, von dem Raum, in dem der Vergaser 10 und der Luftfilter 11 angeordnet sind, trennt. Der Vergaser 10 besitzt ein Vergasergehäuse 20, das an einem Vergaserträger 18 angeordnet ist. Der Vergaserträger 18 ist gegenüber der Zwischenwand 17 beweglich und über den Verbindungsstutzen 50 (Fig. 1) mit dem Verbrennungsmotor 8 (Fig. 1) verbunden. Der Verbindungsstutzen 50 ragt dabei durch eine Öffnung 66 der Zwischenwand 17, wie Fig. 5 zeigt. An der dem Vergaserträger 18 abgewandten Seite des Vergasergehäuses 20 ist ein Luftfilterträger 19 angeordnet. Am Luftfilterträger 19 ist eine Fixiereinrichtung 24 zur Fixierung eines in Fig. 2 nicht gezeigten Filterelements vorgesehen. Der Luftfilterträger 19 ist für einen Rundfilter vorgesehen. Am Luftfilterträger 19 sind zwei Arme 25 angeordnet, die im Ausführungsbeispiel einteilig mit dem Luftfilterträger 19 ausgebildet ist und die in die Antivibrationselemente 26 ragen. Die Antivibrationselemente 26 entkoppeln den Luftfilterträger 19 vom Motorgehäuse 3 und lassen Relativbewegungen der zweiten Baugruppe 32 gegenüber dem Motorgehäuse 3 und dem Verbrennungsmotor 8 zu. Die Antivibrationselemente 26 sind bevorzugt aus einem Elastomer ausgebildet, besonders bevorzugt aus Gummi.

Wie Fig. 2 auch zeigt, ist ein Betriebsartensteller 27 vorgesehen, der ebenfalls Teil der zweiten Baugruppe 32 ist und der an einem der Arme 25 schwenkbar gelagert ist. Der Betriebsartensteller 27 ist zur Betätigung durch einen Bediener vorgesehen und ragt mit einem Betätigungsabschnitt 29 aus dem Motorgehäuse 3. Der Betriebsartensteller 27 trägt ein im Folgenden noch näher beschriebenes zweites Kontaktelement 38. Am Motorgehäuse 3 sind ein erstes Kontaktelement 37 sowie ein drittes Kontaktelement 39 befestigt. Die Kontaktelemente 37, 38 und 39 bilden einen Schalter 36. Im Ausführungsbeispiel ist der Schalter 36 ein Kurzschlussschalter. Das Motorgehäuse 3 umfasst ein Gehäuseteil 15, das vorteilhaft zur Aufbewahrung des Kraftstoffs für den Verbrennungsmotor 8 dient. Das Gehäuseteil 15 ist in üblicher Betriebslage unterhalb des Vergasers 10 und des Luftfilters 11 angeordnet. An der Oberseite des Gehäuseteils 15 sind die Antivibrationselemente 26 angeordnet.

Der Vergaser 10 weist im Ausführungsbeispiel eine Chokewelle 21, an der ein Chokehebel 22 drehfest fixiert ist, auf. An einer in Fig. 2 nicht gezeigten Drosselwelle 71 (Fig. 5) ist ein Drosselhebel 23 fixiert. Der Chokehebel 22 und der Drosselhebel 23 wirken zusammen, um unterschiedliche Startstellungen des Vergasers 10, vorzugsweise eine Kaltstartstellung und eine Warmstartstellung, einzustellen. Die Startstellungen sind über den Betriebsartensteller 27 einstellbar. Der Betriebsartensteller 27 ist vorteilhaft über eine Koppelstange 28 mit dem Chokehebel 22 verbunden. Durch Verschwenken des Betriebsartenstellers 27 wird der Chokehebel 22 verstellt, der vorteilhaft den Drosselhebel 23 zur Einstellung einer Startstellung einer Drosselklappe mitnimmt.

Am dritten Kontaktelement 39 ist eine Zündleitung 40 angeschlossen. Die Zündleitung 40 ist mit dem Zündmodul 35 (Fig. 1) verbunden. Zum Kurzschließen der Zündeinrichtung 33 betätigt der Bediener den Betriebsartensteller 27 derart, dass das zweite Kontaktelement 38 das erste Kontaktelement 37 und das dritte Kontaktelement 39 elektrisch miteinander verbindet. Das erste Kontaktelement 37 ist mit Masse verbunden. Im Ausführungsbeispiel ist das Kontaktelement 37 mit dem metallischen Kurbelgehäuse verbunden.

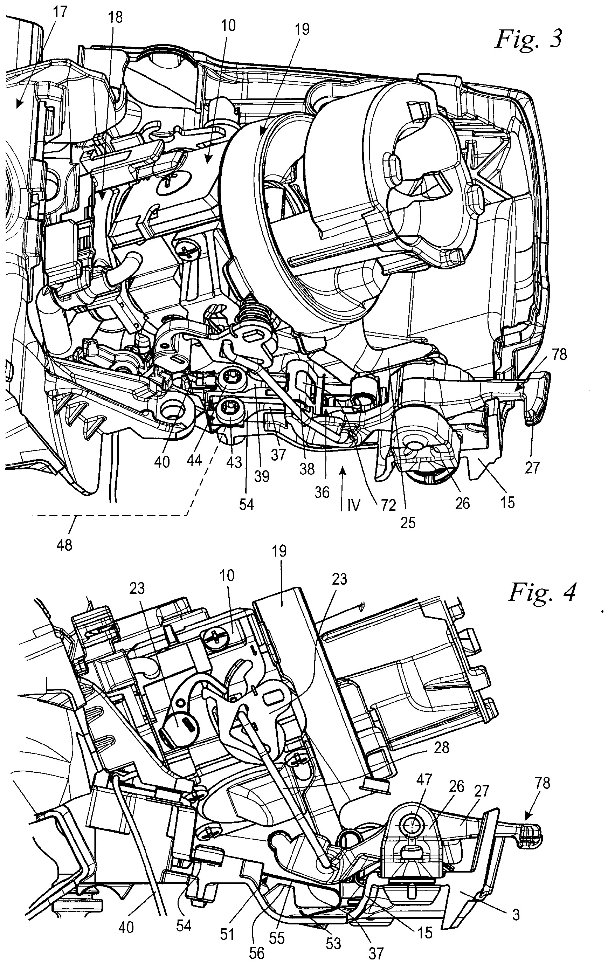

Wie Fig. 3 zeigt, ist das erste Kontaktelement 37 mit einer ersten Kontaktschraube 43 an einem Gehäuseteil 15 fixiert. Das Gehäuseteil 15 begrenzt den Raum, in dem der Vergaser 10 angeordnet ist. Der elektrische Kontakt des ersten Kontaktelements 37 erfolgt über ein nicht gezeigtes Kontaktblech, das seinerseits mit einem Kurbelgehäuse 46 (Fig. 1) des Verbrennungsmotors 8 verbunden ist. Dies ist in Fig. 3 schematisch durch die gestrichelte Linie 48 angedeutet. Das dritte Kontaktelement 39 ist mit einer zweiten Kontaktschraube 44 elektrisch isolierend am Gehäuseteil 15 fixiert. Das dritte Kontaktelement 39 ist mit der Zündleitung 40 elektrisch leitend verbunden.

Fig. 3 und Fig. 4 zeigen den Betriebsartensteller in einer Betriebsstellung 78, in der der Schalter 36 (Fig. 3) geöffnet ist. Wie Fig. 4 zeigt, ist der Betriebsartensteller 27 um eine Schwenkachse 47 schwenkbar gelagert. Fig. 4 zeigt auch die Einhängung der Koppelstange 28 am Betriebsartensteller 27. Wie Fig. 4 auch zeigt, ist die Zündleitung 40 nach unten geführt und dort mit dem Zündmodul 35 (Fig. 1) verbunden. Das erste Kontaktelement 37 ist durch eine erste Kontaktfeder 51 gebildet. Die erste Kontaktfeder 51 ist als längliches, dünnes, gebogenes Blech ausgebildet. Die erste Kontaktfeder 51 besteht aus Metall. Die erste Kontaktfeder 51 besitzt einen Abstützbereich 53, mit dem sie sich am Gehäuseteil 15 abstützt. In einem Befestigungsbereich 54, der auch in Fig. 3 gezeigt ist, ist die erste Kontaktfeder 51 beispielhaft am Gehäuseteil 15 fixiert. Zwischen dem Befestigungsbereich 54 und dem Abstützbereich 53 der Kontaktfeder 51 erstreckt sich ein Federbereich 55, in dem die erste Kontaktfeder 51 frei federnd ausgebildet ist. Wie Fig. 4 auch zeigt, ist am Gehäuseteil 15 ein Anschlag 56 ausgebildet. Der Anschlag 56 definiert eine Endlage des Betriebsartenstellers 27 bei geschlossenem Schalter 36.

Fig. 5 zeigt eine Ansicht von der in Fig. 4 hinten liegenden Seite. In Fig. 5 ist dadurch eine zweite Kontaktfeder 61 sichtbar, die das dritte Kontaktelement 39 bildet. Auch die zweite Kontaktfeder 61 ist als längliches, gebogenes, dünnes Blech ausgebildet. Die zweite Kontaktfeder 61 besteht aus Metall. Die zweite Kontaktfeder 61 weist vorteilhaft einen Abstützbereich 63 der zweiten Kontaktfeder 61 auf, mit dem die Kontaktfeder 61 am Gehäuseteil 15 anliegt. Die zweite Kontaktfeder 61 weist vorteilhaft einen frei federnden Federbereich 65 der zweiten Kontaktfeder 61 auf. In einem Befestigungsbereich 64 ist die zweite Kontaktfeder 61 am Gehäuseteil 15 fixiert. Der Abstützbereich 63 der zweiten Kontaktfeder 61 ist vorteilhaft identisch zum Abstützbereich 53 der ersten Kontaktfeder 51 ausgebildet. Der Federbereich 65 der zweiten Kontaktfeder 61 ist vorteilhaft identisch zum Federbereich 55 der ersten Kontaktfeder 51 ausgebildet. Der Befestigungsbereich 54 der ersten Kontaktfeder 51 unterscheidet sich vorteilhaft vom Befestigungsbereich 64 der zweiten Kontaktfeder 61, so dass ausreichend Platz für die erste Kontaktschraube 43 bzw. die zweite Kontaktschraube 44 bleibt und das erste Kontaktelement 37 und das zweite Kontaktelement 39 dennoch unmittelbar nebeneinander angeordnet werden können.

Wie Fig. 5 zeigt, besitzt das zweite Kontaktelement 38 einen Federbereich 75, der zur Herstellung des elektrischen Kontakts zum ersten Kontaktelement 37 und zum zweiten Kontaktelement 39 vorgesehen ist. Der frei federnde Federbereich 55 des dritten Kontaktelements 39 besitzt bei geöffnetem Schalter 36 zum Federbereich 75 des zweiten Kontaktelements 38 einen Abstand b. Der Abstand b beträgt vorteilhaft etwa das 1,5fache bis 3fache der maximalen Relativbewegung zwischen der ersten Baugruppe 31 und der zweiten Baugruppe 32 in dem Bereich, in dem die erste Kontaktfeder 51 angeordnet ist. In unterschiedlichen Bereichen der Motorsäge 1 kann sich durch die Anordnung der Antivibrationselemente 26 eine unterschiedlich große maximale Relativbewegung ergeben. Die maximale Relativbewegung ist dabei die Wegdifferenz, die die erste Baugruppe 31 gegenüber der zweiten Baugruppe 32 an der ersten Kontaktfeder 51 zwischen ihren beiden Maximalstellungen ausführt.

Wie Fig. 5 auch zeigt, ist das zweite Kontaktelement 38 durch eine Kontaktfeder 60 gebildet, die als dünnes, gebogenes Blechteil ausgebildet ist, das einen Befestigungsabschnitt 74 und einen Federbereich 75 besitzt. Im Befestigungsbereich 74 umgreift das zweite Kontaktelement 38 einen Zapfen 72 des Betriebsartenstellers 27. Der Federbereich 75 ragt von dem Zapfen 72 weg in Richtung auf den Federbereich 55 der ersten Kontaktfeder 51 und den zweiten Federbereich 65 der zweiten Kontaktfeder 61. Der Zapfen 72 ist auch in Fig. 2 und Fig. 3 gezeigt.

In Fig. 5 ist auch die Gestaltung des Vergasers 10 gezeigt. Das Vergasergehäuse 20 des Vergasers 10 ist dabei schematisch dargestellt. Im Vergasergehäuse 20 des Vergasers 10 ist ein Ansaugkanalabschnitt 68 ausgebildet, in dem vorteilhaft eine Chokeklappe 70 mit der Chokewelle 21 schwenkbar gelagert ist. Eine Drosselklappe 69 ist im Ansaugkanalabschnitt 68 mit einer Drosselwelle 71 schwenkbar gelagert. An der Drosselwelle 71 ist der Drosselhebel 23 (Fig. 2) fixiert.

Wie Fig. 5 auch zeigt, besitzt der Betriebsartensteller 27 vorteilhaft eine Rastnockenkontur 45, an der eine Rastfeder 41 anliegt. Die Rastfeder 41 ist an einem Arm 25 des Luftfilterträgers 19 gehalten und legt Raststellungen des Betriebsartenstellers 27 fest. Die Rastfeder 41 dient zur definierten Positionierung des Betriebsartenstellers 27. In der in den Fig. 5 und 6 gezeigten geöffneten Stellung des Schalters 36 liegt die Rastfeder 41 in einer Rastvertiefung 42 der Rastnockenkontur 45. Bei geöffnetem Schalter 36 befindet sich der Betriebsartensteller 27 in einer stabilen Lage, nämlich in der Betriebsstellung 78.

Fig. 6 zeigt die Anordnung der beiden Kontaktfedern 51 und 61 nebeneinander. Bei geöffnetem Schalter 36 besitzen die Kontaktfedern 51 und 61 vorteilhaft den gleichen Abstand b zum Federbereich 75 des zweiten Kontaktelements 38.

Wie Fig. 6 auch zeigt, ist eine Trennrippe 59 zwischen dem Abstützbereich 53 der ersten Kontaktfeder 51 und dem Abstützbereich 63 der zweiten Kontaktfeder 61 angeordnet. Im Ausführungsbeispiel ist die Trennrippe 59 am Gehäuseteil 15 angeformt. Die Trennrippe 59 erstreckt sich zwischen den Abstützbereichen 53 und 63 und bewirkt dadurch eine elektrische Trennung der Kontaktfedern 51 und 61.

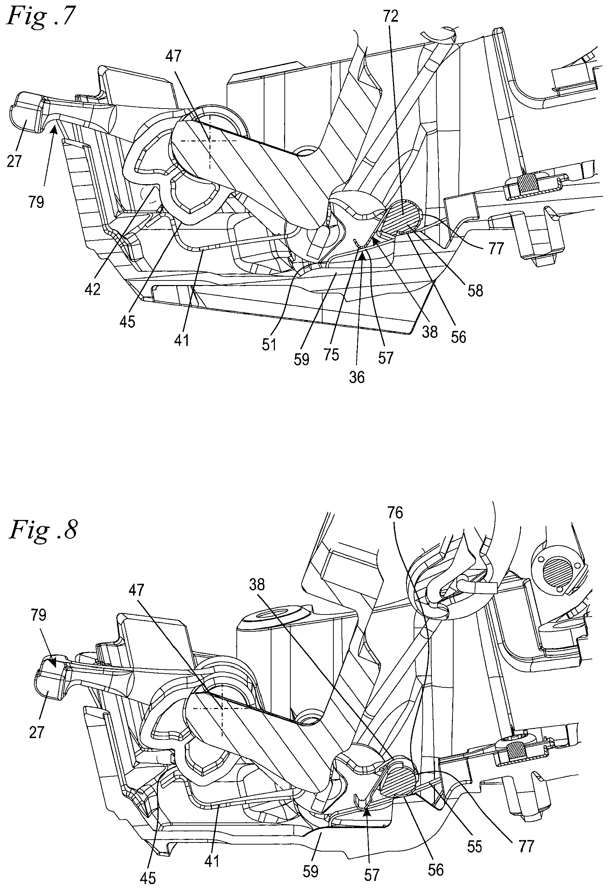

Die Figuren 7 und 8 zeigen einen Schnitt durch die Trennrippe 59. Die dahinter liegende zweite Kontaktfeder 61 ist ebenfalls gezeigt.

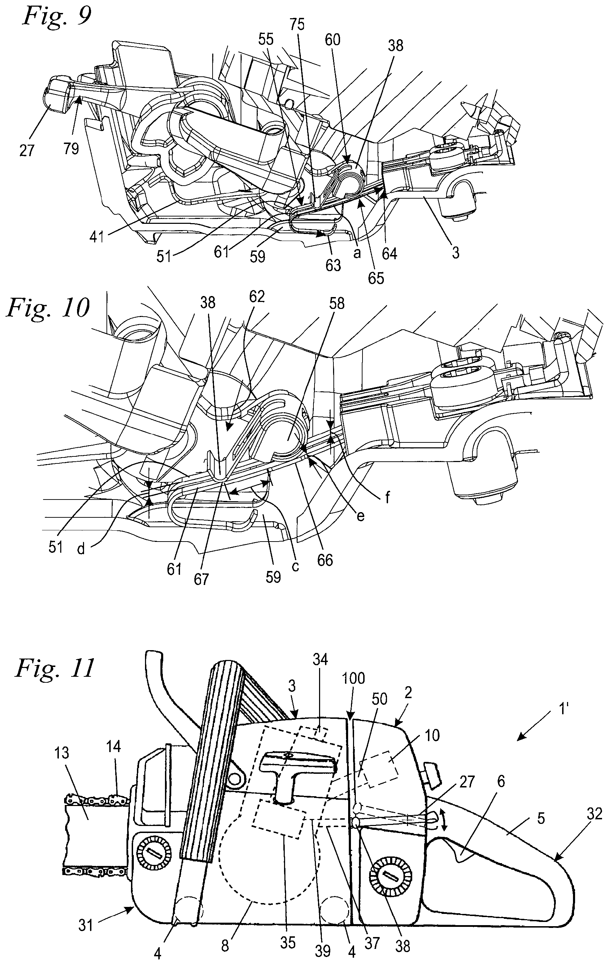

Die Figuren 9 und 10 zeigen einen Schnitt in Blickrichtung vor der Kontaktfeder 51, so dass in Fig. 9 und 10 beide Kontaktfedern 51 und 61 sichtbar sind.

Die Fig. 7 bis 10 zeigen den Schalter 36 in geschlossenem Zustand. Der Betriebsartensteller 27 befindet sich in einer Stoppstellung. Die Stoppstellung 79 kann eine stabile Lage des Betriebsartenstellers 27 sein. In vorteilhafter Gestaltung ist der Betriebsartensteller 27 als Taster ausgebildet und federt, sobald er vom Bediener losgelassen wird, aus der Stoppstellung 79 in die Betriebsstellung 78 zurück. Nach Betätigung des Schalters 36 durch den Bediener wird die Zündung des Verbrennungsmotors 8 unterbrochen, also die Zündkerze 34 (Fig. 1) nicht mehr gezündet, und der Verbrennungsmotor 8 geht aus.

In Stoppstellung 79 des Betriebsartenstellers 27 liegt der Federbereich 75 des Kontaktelements 38 an einem Kontaktbereich 57 der ersten Kontaktfeder 51 (Fig. 7) und, wie Fig. 10 zeigt, an einem Kontaktbereich 67 der zweiten Kontaktfeder 61 an und verbindet dadurch die Kontaktfedern 51 und 61 elektrisch leitend miteinander. Dies ist insbesondere in den Fig. 9 und 10 sichtbar.

Wie die Fig. 7 und 8 zeigen, besitzt der Betriebsartensteller 27 einen Anschlagabschnitt 58, der mit dem Anschlag 56 in der Stoppstellung 79 des Betriebsartenstellers 27 zusammenwirken kann. Je nach Lage der Baugruppen 31 und 32 zueinander kann der Anschlagabschnitt 58 auch in Stoppstellung 79 des Betriebsartenstellers 27 einen Abstand zum Anschlag 56 aufweisen. In Stoppstellung 79 liegt das zweite Kontaktelement 38 an den Kontaktelementen 37 und 39 (Fig. 3) an und verbindet diese elektrisch leitend. Das zweite Kontaktelement 38, das am Betriebsartensteller 27 gehalten ist, besitzt hierzu den Federbereich 75, der die Kontaktelemente 37 und 39 kontaktiert.

In der Schnittdarstellung in den Fig. 7 und 8 ist nur die erste Kontaktfeder 51 des ersten Kontaktelements 37 gezeigt. Der Anschlagabschnitt 58 wirkt im Ausführungsbeispiel über das zweite Kontaktelement 38 auf den Anschlag 56. Es kann jedoch auch vorgesehen sein, dass der Anschlagabschnitt 58 unmittelbar auf den Anschlag 56 wirkt. Dadurch wird eine weitere Bewegung des Anschlagabschnitts 58 und damit auch des zweiten Kontaktelements 38 in Richtung auf die erste Kontaktfeder 51 und die zweite Kontaktfeder 61 (Fig. 9) vermieden. Dadurch kann auf einfache Weise eine unzulässige plastische Verformung der Kontaktfedern 51 und 61 vermieden werden.

Wie die Fig. 7 und 8 auch zeigen, ist das zweite Kontaktelement 38 formschlüssig am Betriebsartensteller 27 gehalten. Hierzu ist eine Nase 77 an dem Zapfen 72, der im Ausführungsbeispiel auch den Anschlagabschnitt 58 bildet, angeformt. Die Nase 77 ragt durch eine Aussparung 76 im zweiten Kontaktelement 38. Das zweite Kontaktelement 38 ist der Außenkontur des Zapfens 72 entsprechend gebogen und dadurch auf dem Zapfen 72 gehalten. Die Nase 77 bewirkt eine zusätzliche Sicherung des zweiten Kontaktelements 38 in Richtung parallel zur Schwenkachse 47 des Betriebsartenstellers 27.

Die Fig. 9 und 10 zeigen den Betriebsartensteller 27 in Stoppstellung 79, wobei in der gezeigten Schnittebene beide Kontaktfedern 51 und 61 gezeigt sind. Wie Fig. 9 zeigt, besitzt die zweite Kontaktfeder 61 vom Befestigungsbereich 64 bis zum Abstützbereich 63 eine Länge a. Über die Länge a erstreckt sich der Federbereich 65, in dem die zweite Kontaktfeder 61 frei federnd ausgebildet ist. Die Länge a beträgt vorteilhaft mindestens 10 mm, insbesondere mindestens 15 mm, vorteilhaft mindestens 20 mm. Die erste Kontaktfeder 51 ist entsprechend ausgebildet, und der Federbereich 55 besitzt eine entsprechende, in Fig. 9 nicht eingezeichnete Länge a. Die Kontaktfedern 51 und 61 besitzen eine haken- oder spazierstockförmige Gestaltung mit einer Biegung zwischen einem ersten, an den Befestigungsbereich 54, 64 anschließenden geraden Bereich und einem zweiten, an den Abstützbereich 53, 63 anschließenden geraden Bereich. Der an den Befestigungsbereich 54, 64 anschließende gerade Bereich ist dabei länger als der an den Abstützbereich 53, 63 anschließende gerade Bereich. Am Abstützbereich 53, 63 sind die Kontaktfedern 51, 61 jeweils gebogen ausgebildet, so dass eine linienförmige Anlage am Motorgehäuse 3 sichergestellt ist. Durch die definierte linienförmige Anlage ergibt sich ein definiertes Federverhalten und eine gegenüber einer flächigen Anlage verringerte Verschmutzungsanfälligkeit.

Wie Fig. 10 zeigt, besitzen die Kontaktfedern 61 und 51 einen Abstand d zueinander. Die Kontaktfedern 61 und 51 besitzen jeweils eine Dicke e und eine Breite f. Das zweite Kontaktelement 38 liegt in geschlossenem Zustand des Schalters 36 an der Breitseite der Kontaktfedern 51 und 61, also an der Seite, die die Breite f aufweist, an. Die Breite f ist quer zu einer Bewegungsrichtung 62 des zweiten Kontaktelements 38 gemessen. In Bewegungsrichtung 62 besitzen die Kontaktfedern 51 und 61 eine Dicke e, die deutlich kleiner als die Breite f ist. Im Ausführungsbeispiel beträgt die Breite f mindestens das 1,5fache, bevorzugt mindestens das Doppelte der Dicke e, insbesondere mindestens das 5fache der Dicke e. Der Abstand d kann vorteilhaft das 0,5fache bis 3fache der Breite f betragen. Der Kontaktbereich 57 der ersten Kontaktfeder 51, in dem das zweite Kontaktelement 38 mit der ersten Kontaktfeder 51 in Kontakt kommt, besitzt zum Anschlag 56 einen entlang der ersten Kontaktfeder 51 gemessenen Abstand c. Der Abstand c beträgt vorteilhaft das 0,5fache bis 2fache der Breite f. Der Abstand c beträgt vorteilhaft mindestens das Doppelte, insbesondere mindestens das 5fache der Dicke e. Es kann in alternativer Gestaltung jedoch auch vorgesehen sein, dass der Kontaktbereich 57 im Bereich des Anschlags 56 angeordnet ist. Im Ausführungsbeispiel ragt der Anschlag 56 zwischen die beiden Kontaktfedern 51 und 61. Der Anschlag 56 ist als Verlängerung der Trennrippe 59 ausgebildet. Auch eine seitliche Anordnung des Anschlags 56, also an der der ersten Kontaktfeder 51 abgewandten Seite der zweiten Kontaktfeder 61 oder der der zweiten Kontaktfeder 61 abgewandten Seite der ersten Kontaktfeder 51, kann jedoch vorteilhaft sein. Die Kontaktfedern 51 und 61 sind bezüglich der Dicke e, der Breite f und des Abstands c zum Anschlag 56 gleich ausgebildet, so dass die obigen Ausführungen jeweils für beide Kontaktfedern 51 und 61 zutreffen.

Bei der Verstellung des Betriebsartenstellers 27 aus der Betriebsstellung 78 (Fig. 5) in die Stoppstellung 79 (Fig. 7) gleitet der Federbereich 75 des zweiten Kontaktelements 38 vom ersten Kontakt des Federbereichs 75 mit der ersten Kontaktfeder 51 bis zum Erreichen des Anschlags 65 auf dem Kontaktbereich 57 der ersten Kontaktfeder 51 ab (Fig. 7 und 8). In entsprechender Weise gleitet der Federbereich 75 auf dem Kontaktbereich 67 der zweiten Kontaktfeder 61 ab (Fig. 9 und 10). Durch das Abgleiten der Oberflächen aufeinander findet eine Reinigung der Kontaktflächen bei jedem Schaltvorgang statt. Das Abgleiten des Federbereichs 75 des zweiten Kontaktelements 38 auf dem Kontaktbereich 57 der ersten Kontaktfeder 51 und auf dem Kontaktbereich 67 der zweiten Kontaktfeder 61 wird durch die Anordnung der Kontaktfedern 51 und 61, durch die Richtung, in der die Kontaktfedern 51 und 61 elastisch verformbar sind, sowie die Bewegungsrichtung 62, in der sich das zweite Kontaktelement 38 beim Schaltvorgang bewegt, ermöglicht.

Die Fig. 1 bis 10 zeigen eine Ausführung, bei der der Schalter 36 einen Schwingspalt 30 zwischen einer ersten Baugruppe 31 und einer zweiten Baugruppe 32 überbrückt. Dabei ist ein dritter Schwingspalt 100 zwischen einem Griffgehäuse 2 und einem Motorgehäuse 3 ausgebildet.

Das Ausführungsbeispiel nach Fig. 11 zeigt eine abweichende Gestaltung. Bei der in Fig. 11 schematisch dargestellten Motorsäge 1' umfasst die zweite Baugruppe 32 das Griffgehäuse 2. Eine dritte Baugruppe ist nicht vorgesehen. Der Schalter 36 überbrückt den Schwingspalt 100, der zwischen der ersten Baugruppe 31, die das Motorgehäuse 3 umfasst, und der zweiten Baugruppe 32, die das Griffgehäuse 2 umfasst, gebildet ist. Die in Fig. 11 lediglich schematisch dargestellte Gestaltung des Betriebsartenstellers 27 und der Kontaktelemente 37, 38 und 39 kann entsprechend der Gestaltung zum vorangegangenen Ausführungsbeispiel vorgesehen sein. Gleiche Bezugszeichen bezeichnen entsprechende Elemente wie in den vorangegangenen Figuren.

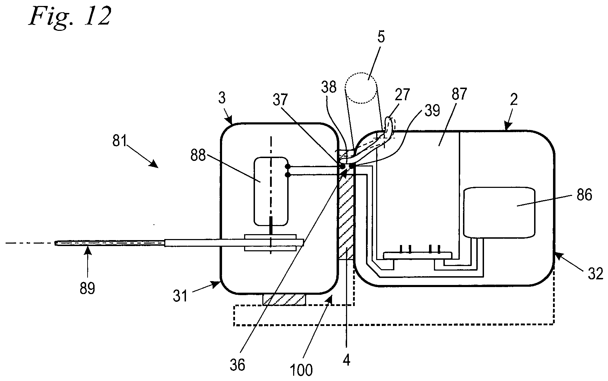

Fig. 12 zeigt ein Ausführungsbeispiel einer Heckenschere 81. Die Heckenschere 81 besitzt keinen Verbrennungsmotor 8, sondern einen Elektromotor 88 zum Antrieb eines Werkzeugs 89. Das Werkzeug 89 wird bei der Heckenschere 81 vorteilhaft durch Messerbalken gebildet, die von dem Elektromotor 88 hin und her gehend angetrieben sind. Der Elektromotor 88 ist Teil einer ersten Baugruppe 31, die auch das Motorgehäuse 3 umfasst. Die Heckenschere 81 besitzt eine zweite Baugruppe 32, die ein Griffgehäuse 2 umfasst. An dem Griffgehäuse 2 ist ein Handgriff 5 fixiert, der im Ausführungsbeispiel als Griffrohr ausgeführt ist. Zwischen der ersten Baugruppe 31 und der zweiten Baugruppe 32 ist der Schwingspalt 100 gebildet, der von Antivibrationselementen 4 überbrückt ist. Im Motorgehäuse 2 sind ein Akku 87 sowie eine Steuereinrichtung 86 angeordnet. Die Steuereinrichtung 86 dient zur Steuerung des Elektromotors 88 und kann auch zur Steuerung des Akkus 87 vorgesehen sein. Die Heckenschere 81 besitzt einen Schalter 36, der durch ein erstes Kontaktelement 37, ein zweites Kontaktelement 38 und ein drittes Kontaktelement 39 gebildet ist. Das erste Kontaktelement 37 ist im Ausführungsbeispiel am Motorgehäuse 3, also an der ersten Baugruppe 31 vorgesehen.

Das dritte Kontaktelement 39 ist am Griffgehäuse 2, also an der zweiten Baugruppe 32 vorgesehen. Das zweite Kontaktelement 38 ist am Betriebsartensteller 27 angeordnet und schwenkbar gelagert.

Bei der in Fig. 12 gezeigten geschlossenen Stellung des Schalters 36 verbindet das Kontaktelement 38 die Kontaktelemente 37 und 39 elektrisch leitend miteinander, so dass der Elektromotor 88 über den Akku 87 mit Energie versorgt und über die Steuereinrichtung 86 angesteuert werden kann. Wird der Betriebsartensteller 27 in die in Fig. 12 mit gestrichelter Linie dargestellte Position verstellt, so ist der Schalter 36 geöffnet, und die Kontaktelemente 37 und 39 sind nicht über das Kontaktelement 38 elektrisch leitend miteinander verbunden. Dadurch ist ein Antrieb des Elektromotors 88 in der geöffneten Stellung des Schalters 36 nicht möglich.

Das Ausführungsbeispiel nach Fig. 12 unterscheidet sich von den vorangegangenen Ausführungsbeispielen darin, dass das erste Kontaktelement 37 und das dritte Kontaktelement 39 nicht an der gleichen Baugruppe angeordnet sind, sondern an unterschiedlichen Baugruppen. Im Ausführungsbeispiel ist der Betriebsartensteller 27 Teil der zweiten Baugruppe 32. Auch eine Gestaltung, bei der der Betriebsartensteller 27 Teil der ersten Baugruppe 31 ist, kann jedoch vorteilhaft sein.

In allen Ausführungsbeispielen kann der Schalter 36 eine oder mehrere stabile Schaltpositionen besitzen. Es kann jedoch auch vorgesehen sein, dass der Betriebsartensteller 27 zumindest für eine Schaltposition als Taster ausgebildet ist, der nach dem Loslassen zurück in seine unbetätigte Ausgangslage verstellt wird. Die unbetätigte Ausgangslage ist dabei insbesondere die Betriebsstellung 78 des Betriebsartenstellers 27. Im Ausführungsbeispiel nach den Fig. 1 bis 10 wird die Rückstellung in die Betriebsstellung 78 durch die Rastfeder 41 und durch die Gestaltung der Rastnockenkontur 45 bewirkt. In der in den Fig. 7 bis 10 gezeigten geschlossenen Stellung des Schalters 36 und der Stoppstellung 79 des Betriebsartenstellers 27 übt die Rastfeder 41 über die Rastnockenkontur 45 eine Kraft auf den Betriebsartensteller 27 aus, die den Betriebsartensteller 27 beim Loslassen des Betriebsartentellers 27 durch den Bediener zurück in die in den Fig. 4 bis 6 gezeigte Betriebsstellung 78 des Betriebsartenstellers 78 und die geöffnete Stellung des Schalters 36 verstellt.

## Patentansprüche

1. Handgeführtes Arbeitsgerät, wobei das Arbeitsgerät eine erste Baugruppe (31) und eine zweite Baugruppe (32) aufweist, wobei die zweite Baugruppe (32) gegenüber der ersten Baugruppe (31) über mindestens ein Antivibrationselement (4, 26) beweglich gelagert ist, wobei zwischen der ersten Baugruppe (31) und der zweiten Baugruppe (32) ein Schwingspalt (30, 100) gebildet ist, der von dem mindestens einen Antivibrationselement (4, 26) überbrückt ist, wobei das Arbeitsgerät mindestens einen vom Bediener zu betätigenden Schalter (36) besitzt, wobei der Schalter (36) mindestens ein erstes Kontaktelement (37) und mindestens ein zweites Kontaktelement (38) umfasst, die sich bei geschlossenem Schalter (36) kontaktieren und die bei geöffnetem Schalter (36) keinen elektrisch leitenden Kontakt herstellen, wobei das zweite Kontaktelement (38) Teil der zweiten Baugruppe (32) ist,
**dadurch gekennzeichnet, dass** das mindestens eine erste Kontaktelement (37) Teil der ersten Baugruppe (31) ist und dass das erste Kontaktelement (37) und das zweite Kontaktelement (38) bei geschlossenem Schalter (36) den Schwingspalt (30, 100) zwischen der ersten Baugruppe (31) und der zweiten Baugruppe (32) überbrücken.

2. Arbeitsgerät nach Anspruch 1,
**dadurch gekennzeichnet, dass** das erste Kontaktelement (37) durch eine erste Kontaktfeder (51) gebildet ist.

3. Arbeitsgerät nach Anspruch 2,
**dadurch gekennzeichnet, dass** an der ersten Kontaktfeder (51) ein Abstützbereich (53) der ersten Kontaktfeder (51) gebildet ist, mit dem sich die erste Kontaktfeder (51) an der ersten Baugruppe (31) abstützt.

4. Arbeitsgerät nach Anspruch 2 oder 3,
**dadurch gekennzeichnet, dass** an der ersten Kontaktfeder (51) ein Befestigungsbereich (54) der ersten Kontaktfeder (51) gebildet ist, an dem die erste Kontaktfeder (51) an der ersten Baugruppe (31) fixiert ist.

5. Arbeitsgerät nach einem der Ansprüche 2 bis 4,
**dadurch gekennzeichnet, dass** an der ersten Baugruppe (31) ein Anschlag (56) für das zweite Kontaktelement (38) ausgebildet ist.

6. Arbeitsgerät nach Anspruch 5,
**dadurch gekennzeichnet, dass** das zweite Kontaktelement (38) an einem Kontaktbereich (57) des Federbereichs (55) mit der ersten Kontaktfeder (51) in Kontakt kommt, der in Richtung einer Längserstreckung der ersten Kontaktfeder (51) einen Abstand (c) zu dem Anschlag (56) besitzt.

7. Arbeitsgerät nach einem der Ansprüche 1 bis 6,
**dadurch gekennzeichnet, dass** das erste Kontaktelement (37) bei geöffnetem Kurzschlussschalter (36) zu dem zweiten Kontaktelement (38) einen Abstand (b) besitzt, wobei der Abstand (b) etwa der 1,5 fachen bis 3fachen maximalen Relativbewegung zwischen der ersten Baugruppe (31) und der zweiten Baugruppe (32) an dem ersten Kontaktelement (37) entspricht.

8. Arbeitsgerät nach einem der Ansprüche 1 bis 7,
**dadurch gekennzeichnet, dass** der Schalter (36) ein drittes Kontaktelement (39) umfasst, das Teil der ersten Baugruppe (31) ist und das bei geschlossenem Schalter (36) über das zweite Kontaktelement (38) elektrisch leitend mit dem ersten Kontaktelement (37) verbunden ist.

9. Arbeitsgerät nach Anspruch 7,
**dadurch gekennzeichnet, dass** das dritte Kontaktelement (39) durch eine zweite Kontaktfeder (61) gebildet ist, wobei an der zweiten Kontaktfeder (61) ein Abstützbereich (63) der zweiten Kontaktfeder (61) gebildet ist, mit dem sich die zweite Kontaktfeder (61) an der ersten Baugruppe (31) abstützt und wobei an der zweiten Kontaktfeder (61) ein Befestigungsbereich (64) der zweiten Kontaktfeder (61) gebildet ist, an dem die zweite Kontaktfeder (61) an der ersten Baugruppe (31) fixiert ist.

10. Arbeitsgerät nach Anspruch 9,
**dadurch gekennzeichnet, dass** zwischen dem Abstützbereich (53) der ersten Kontaktfeder (51) und dem Abstützbereich (63) der zweiten Kontaktfeder (61) eine Trennrippe (59) verläuft.

11. Arbeitsgerät nach einem der Ansprüche 1 bis 10,
**dadurch gekennzeichnet, dass** das Arbeitsgerät einen Verbrennungsmotor (8) aufweist, wobei der Verbrennungsmotor (8) eine Zündeinrichtung (33) umfasst, die über den Schalter (36) mit Masse verbindbar ist, wobei das Arbeitsgerät einen Vergaser (10) zur Zufuhr von Kraftstoff/Luft-Gemisch zu dem Verbrennungsmotor (8) und einen Betriebsartensteller (27) zur Einstellung mindestens einer Startstellung des Vergasers (10) umfasst, dass der Verbrennungsmotor (8) Teil der ersten Baugruppe (31) ist und dass der Vergaser (8) und der Betriebsartensteller (27) Teil der zweiten Baugruppe (32) sind.

12. Arbeitsgerät nach Anspruch 11,
**dadurch gekennzeichnet, dass** der Betriebsartensteller (27) an einem Griffgehäuse (2) gelagert ist, das Teil der zweiten Baugruppe (32) ist, und dass der von dem Schalter (36) überbrückte Schwingspalt (100) ein Schwingspalt zwischen dem Griffgehäuse (2) und dem Verbrennungsmotor (8) ist.

13. Arbeitsgerät nach Anspruch 11,
**dadurch gekennzeichnet, dass** das Arbeitsgerät eine dritte Baugruppe (73) besitzt, die ein Griffgehäuse (2) umfasst, wobei der zwischen der ersten Baugruppe (31) und der zweiten Baugruppe (32) gebildete Schwingspalt (30) ein erster Schwingspalt ist und wobei zwischen der dritten Baugruppe (73) und der ersten Baugruppe (31) ein zweiter Schwingspalt (100) gebildet ist, der von mindestens einem zweiten Antivibrationselement (15) überbrückt ist.

14. Arbeitsgerät nach einem der Ansprüche 11 bis 13,
**dadurch gekennzeichnet, dass** der Betriebsartensteller (27) das zweite Kontaktelement (38) trägt.

15. Arbeitsgerät nach Anspruch 14,
**dadurch gekennzeichnet, dass** das zweite Kontaktelement (38) eine Aussparung (76) aufweist, durch die eine Nase (77) des Betriebsartenstellers (27) ragt, die das zweite Kontaktelement (38) formschlüssig sichert.

16. Arbeitsgerät nach einem der Ansprüche 11 bis 15,
**dadurch gekennzeichnet, dass** der Betriebsartensteller (27) einen Anschlagabschnitt (58) aufweist, mit dem er auf den Anschlag (56) wirkt.

## Claims

1. Hand-guided working implement having a first assembly (31) and a second assembly (32), wherein the second assembly (32) is movably mounted with respect to the first assembly (31) by way of at least one anti-vibration element (4, 26), wherein a vibration gap (30, 100) bridged by the at least one anti-vibration element (4, 26) is formed between the first assembly (31) and the second assembly (32), wherein the working implement comprises at least one switch (36) for operation by the operator, wherein the switch (36) comprises at least one first contact element (37) and at least one second contact element (38), which are in contact when the switch (36) is closed and do not establish an electric contact when the switch (36) is open, wherein the second contact element (38) is a part of the second assembly (32), **characterised in that** the at least one first contact element (37) is a part of the first assembly (31), and **in that** the first contact element (37) and the second contact element (38) bridge the vibration gap (30, 100) between the first assembly (31) and the second assembly (32) when the switch (36) is closed.

2. Working implement according to claim 1,
**characterised in that** the first contact element (37) is represented by a first contact spring (51).

3. Working implement according to claim 2,
**characterised in that** a support area (53) of the first contact spring (51) is formed on the first contact spring (51), whereby the first contact spring (51) is supported on the first assembly (31).

4. Working implement according to claim 2 or 3,
**characterised in that** a fastening area (54) of the first contact spring (51) is formed on the first contact spring (51), where the first contact spring (51) is fixed to the first assembly (31).

5. Working implement according to any of claims 2 to 4,
**characterised in that** a stop (56) for the second contact element (38) is formed on the first assembly (31).

6. Working implement according to claim 5,
**characterised in that** the second contact element (38) comes into contact with the first contact spring (51) in a contact area (57) of the spring region (55), which has a distance (c) from the stop (56) in the direction of a longitudinal extent of the first contact spring (51).

7. Working implement according to any of claims 1 to 6,
**characterised in that** the first contact element (37) has a distance (b) from the second contact element (38) when the short-circuiting switch (36) is open, the distance (b) corresponding to approximately 1.5 to 3 times the maximum relative movement between the first assembly (31) and the second assembly (32) at the first contact element (37).

8. Working implement according to any of claims 1 to 7,
**characterised in that** the switch (36) comprises a third contact element (39), which is a part of the first assembly (31) and is connected in an electrically conductive manner to the first contact element (37) via the second contact element (38) when the switch (36) is closed.

9. Working implement according to claim 7,
**characterised in that** the third contact element (39) is represented by a second contact spring (61), wherein a support area (63) of the second contact spring (61) is formed on the second contact spring (61), whereby the second contact spring (61) is supported on the first assembly (31), and wherein a fastening area (64) of the second contact spring (61) is formed on the second contact spring (61), where the second contact spring (61) is fixed to the first assembly (31).

10. Working implement according to claim 9,
**characterised in that** a separating rib (59) extends between the support area (53) of the first contact spring (51) and the support area (63) of the second contact spring (61).

11. Working implement according to any of claims 1 to 10,
**characterised in that** the working implement has an internal combustion engine (8), the internal combustion engine (8) comprising an ignition device (33), which can be connected to earth via the switch (36), the working implement comprising a carburettor (10) for supplying the internal combustion engine (8) with a fuel/air mixture and a mode selector (27) for setting at least one starting position of the carburettor (10), **in that** the internal combustion engine (8) is a part of the first assembly (31), and **in that** the carburettor (10) and the mode selector (27) are a part of the second assembly (32).

12. Working implement according to claim 11,
**characterised in that** the mode selector (27) is mounted on a handle housing (2), which is a part of the second assembly (32), and **in that** the vibration gap (100) bridged by the switch (36) is a vibration gap between the handle housing (2) and the internal combustion engine (8).

13. Working implement according to claim 11,
**characterised in that** the working implement has a third assembly (73), which comprises a handle housing (2), wherein the vibration gap (30) formed between the first assembly (31) and the second assembly (32) is a first vibration gap, and wherein a second vibration gap (100) bridged by at least one second anti-vibration element (15) is formed between the third assembly (73) and the first assembly (31).

14. Working implement according to any of claims 11 to 13,
**characterised in that** the mode selector (27) carries the second contact element (38).

15. Working implement according to claim 14,
**characterised in that** the second contact element (38) has a recess (76), through which a nose (77) of the mode selector (27), which positively secures the second contact element (38), extends.

16. Working implement according to any of claims 11 to 15,
**characterised in that** the mode selector (27) has a stop section (58), with which it acts on the stop (56).

## Revendications

1. Appareil de travail à main, dans lequel l'appareil à main comporte un premier sous-groupe (31) et un deuxième sous-groupe (32), dans lequel le deuxième sous-groupe (32) est monté mobile par rapport au premier sous-groupe (31) par l'intermédiaire d'au moins un élément antivibrations (4, 26), dans lequel entre le premier sous-groupe (31) et le deuxième sous-groupe (32) est formé un interstice de vibrations (30, 100) qui est couvert par le au moins un élément antivibrations (4, 26), dans lequel l'appareil de travail a au moins un commutateur (36) à actionner par l'utilisateur, dans lequel le commutateur (36) comprend au moins un premier élément de contact (37) et au moins un deuxième élément de contact (38) qui viennent en contact quand le commutateur (36) est fermé et qui n'établissent pas de contact conducteur d'électricité quand le commutateur (36) est ouvert, dans lequel le deuxième élément de contact (38) fait partie du deuxième sous-groupe (32),
**caractérisé en ce que** le au moins un élément de contact (37) fait partie du premier sous-groupe (31) et **en ce que** le premier élément de contact (37) et le deuxième élément de contact (38), quand le commutateur (36) est fermé, couvrent l'interstice de vibrations (30, 100) entre le premier sous-groupe (31) et le deuxième sous-groupe (32).

2. Appareil selon la revendication 1,
**caractérisé en ce que** le premier élément de contact (37) est formé par un premier ressort de contact (51).

3. Appareil selon la revendication 2,
**caractérisé en ce que** sur le premier ressort de contact (51) est formée une zone d'appui (53) du premier ressort de contact (51), avec laquelle le premier ressort de contact (51) s'appuie sur le premier sous-groupe (31).

4. Appareil selon la revendication 2 ou 3,
**caractérisé en ce que** sur le premier ressort de contact (51) est formée une zone de fixation (54) du premier ressort de contact (51), en laquelle le premier ressort de contact (51) est fixé au premier sous-groupe (31).

5. Appareil selon l'une des revendications 2 à 4,
**caractérisé en ce que** sur le premier sous-groupe (31) est formée une butée (56) pour le deuxième élément de contact (38).

6. Appareil selon la revendication 5,
**caractérisé en ce que** le deuxième élément de contact (38) vient en contact avec le premier ressort de contact (51) en une zone de contact (57) de la zone de ressort (55) qui, dans la direction d'une extension longitudinale du premier ressort de contact (51), présente un écartement (c) par rapport à la butée (56).

7. Appareil selon l'une des revendications 1 à 6,
**caractérisé en ce que** le premier élément de contact (37), quand le commutateur à coupe-circuit (36) est ouvert, présente un écartement (b) par rapport au deuxième élément de contact (38), dans lequel l'écartement (b) correspond à environ 1,5 fois à 3 fois le mouvement relatif maximal entre le premier sous-groupe (31) et le deuxième sous-groupe (32) en le premier élément de contact (37).

8. Appareil selon l'une des revendications 1 à 7,
**caractérisé en ce que** le commutateur (36) comprend un troisième élément de contact (39) qui fait partie du premier sous-groupe (31) et qui, quand le commutateur (36) est fermé, est relié par le deuxième élément de contact (38) au premier élément de contact (37) de manière électriquement conductrice.

9. Appareil selon la revendication 7,
**caractérisé en ce que** le troisième élément de contact (39) est formé par un deuxième ressort de contact (61), dans lequel sur le deuxième ressort de contact (61) est formée une zone d'appui (63) du deuxième ressort de contact (61) avec laquelle le deuxième ressort de contact (61) s'appuie sur le premier sous-groupe (31), et dans lequel une zone de fixation (64) du deuxième ressort de contact (61) est formée sur le deuxième ressort de contact (61) en laquelle le deuxième ressort de contact (61) est fixé au premier sous-groupe (31).

10. Appareil selon la revendication 9,
**caractérisé en ce qu'**une nervure de séparation (59) s'étend entre la zone d'appui (53) du premier ressort de contact (51) et la zone d'appui (63) du deuxième ressort de contact (61).

11. Appareil selon l'une des revendications 1 à 10,
**caractérisé en ce que** l'appareil de travail comporte un moteur à combustion interne (8), dans lequel le moteur à combustion interne (8) comprend un dispositif d'allumage (33) qui est apte à être relié à la masse par le commutateur (36), dans lequel l'appareil de travail comprend un carburateur (10) pour amener un mélange carburant/air dans le moteur à combustion interne (8), et un sélecteur de mode de fonctionnement (27) pour régler au moins une position de démarrage du carburateur (10), **en ce que** le moteur à combustion interne (8) fait partie du premier sous-groupe (31) et **en ce que** le carburateur (8) et le sélecteur de mode de fonctionnement (27) font partie du deuxième sous-groupe (32).

12. Appareil selon la revendication 11,
**caractérisé en ce que** le sélecteur de mode de fonctionnement (27) est monté sur un boîtier à poignée (2) qui fait partie du deuxième sous-groupe (32), et **en ce que** l'interstice de vibrations (100) couvert par le commutateur (36) est un interstice de vibrations entre le boîtier à poignée (2) et le moteur à combustion interne (8).

13. Appareil selon la revendication 11,
**caractérisé en ce que** l'appareil de travail comporte un troisième sous-groupe (73) qui comprend un boîtier à poignée (2), dans lequel l'interstice de vibrations (30) formé entre le premier sous-groupe (31) et le deuxième sous-groupe (32) est un premier interstice de vibrations, et dans lequel entre le troisième sous-groupe (73) et le premier sous-groupe (31) est formé un deuxième interstice de vibrations (100) qui est couvert par au moins un deuxième élément antivibrations (15).

14. Appareil selon l'une des revendications 11 à 13,
**caractérisé en ce que** le sélecteur de mode de fonctionnement (27) porte le deuxième élément de contact (38).

15. Appareil selon la revendication 14,
**caractérisé en ce que** le deuxième élément de contact (38) présente une cavité (76) d'où dépasse un taquet (77) du sélecteur de mode de fonctionnement (27) qui bloque le deuxième élément de contact (38) par complémentarité de forme.

16. Appareil selon l'une des revendications 11 à 15,
**caractérisé en ce que** le sélecteur de mode de fonctionnement (27) comporte une section de butée (58) avec laquelle il agit sur la butée (56).
